# EUROPEAN PATENT SPECIFICATION

(11) **EP 1 751 649 B1**
(45) Date of publication and mention of the grant of the patent: **25.04.2012**
(21) Application number: 05749154.0
(22) Date of filing: 18.05.2005
(51) Int. Cl.: G06F 1/00

(54) **SYSTEMS AND METHOD FOR COMPUTER SECURITY**
SYSTEME UND VERFAHREN FÜR COMPUTERSICHERHEIT
SYSTEMES ET PROCEDE POUR LA SECURITE INFORMATIQUE

(30) Priority: 19.05.2004 US 572514 P
(43) Date of publication of application: 14.02.2007
(73) Proprietor: Computer Associates Think, Inc., Islandia, NY 11749 (US)
(72) Inventor: CARMONA, Itshak, Petach-Tikva (IL)
(74) Representative: Dunlop, Hugh Christopher
(86) International application number: PCT/US2005/017467
(87) International publication number: WO 2005/114358

(56) References cited:
- EP-A- 0 918 285
- US-A- 5 452 442
- NACHENBERG C S: "A NEW TECHNIQUE FOR DETECTING POLYMORPHIC COMPUTER VIRUSES. A THESIS SUBMITTED IN PARTIAL SATISFACTION OF THE REQUIREMENTS FOR THE DEGREE MASTER OF SCIENCE IN COMPUTER SCIENCE AND ENGINEERING" THESIS UNIVERSITY OF CALIFORNIA, 1995, pages I-V,1, XP000197628
- C Brenton et al: "Mastering Network Security", SYBEX 2002 , ISBN: 0782141420 Retrieved from the Internet: URL:http://www.sec88.com/book/NetWork/Mast eringNetworkSecurity.pdf [retrieved on 2011-01-17]
- Jeffrey O. Kephart et al: "Automatic Extraction of Computer Virus Signatures", In Proceedings of the 4th Virus Bulletin International Conference, R. Ford, ed., Virus Bulletin Ltd., Abingdon, England, 1994, pp. 178-184 , 1994, Retrieved from the Internet: URL:http://www.research.ibm.com/antivirus/ SciPapers/Kephart/VB94/vb94.html [retrieved on 2011-01-17]

## Description

### Reference to Related Application

This application is based on and claims the benefit of Provisional Application Serial No. 60/572,514 filed May 19,2004.

### BACKGROUND

### TECHNICAL FIELD

The present disclosure relates to security and, more specifically, to computer system security.

### DESCRIPTION OF THE RELATED ART

In today's highly computer dependant environment, computer security is a major concern. The security of computers is routinely threatened by computer viruses, Trojan horses, worms and the like. Once computers are infected with these malicious programs, the malicious programs may have the ability to damage expensive computer hardware, destroy valuable data, tie up limited computing resources or compromise the security of sensitive information.

To guard against the risk of malicious programs (malware); antivirus programs are often employed. Antivirus programs are computer programs that can scan computer systems to detect malware embedded within infected computer files. Malware can then be removed from infected files, the infected files may be quarantined or the infected file may be deleted from the computer system.

Antivirus programs currently use a wide range of techniques to detect and remove malware from affected computer systems. One traditional technique for detecting malware is to perform a virus signature scan. According to this technique, computer files, key hard disk sectors such as the boot sector and master boot record (MBR) and/or computer system memory can be searched for the presence of virus signatures. Virus signatures are key patterns of computer code that are known to be associated with malware. Virus signature scans use a database of known virus signatures that is consistently maintained and updated. This technique has the distinct disadvantage that only viruses with corresponding previously identified virus signatures can be detected and corrected. Virus signatures may not be known for new viruses and as a result, virus signature scans may be useless against new viruses.

After a virus signature scan has identified an infected file, extraction may be used to restore the infected file to its previous state. The method of extraction is generally specific to the particular virus found and as a result, virus extraction information is obtained, generally as new virus signatures are obtained.

Another traditional technique for detecting malware is to perform a cyclic redundancy check (CRC) scan. Rather than searching for a known virus signature, the CRC scan attempts to search for computer files that have been infected with any form of virus, both known and unknown. This technique recognizes that essentially all viruses replicate by modifying executable files with malicious code. According to this technique, the CRC scanner scans all executable files on the computer system. Each executable file is analyzed by a particular mathematical function that produces a checksum value for that executable file. A database is maintained listing all executable files on the computer system and their associated checksum value. The CRC scan is repeated periodically and newly calculated checksum values are compared to the initially recorded baseline checksum values. Because an executable file infected with a virus would have a different checksum value than the same file prior to infection, the CRC scanner is able to detect viral infection of an executable file by a change in the checksum of that file.

After malware has been detected using a CRC scan, the malware can be extracted so the file may resume normal use. Extraction of the malware may require specific knowledge of the malware and how it functions. In this respect, the CRC extraction process has similarities to the virus signature scan extraction process.

The nature of the malware threat has changed in recent years. Malware is commonly modified after its initial release. Some of these modifications are carried out by subsequent malicious programmers while other modifications are carried out by the malware's ability to rearrange itself, as is the case for polymorphic viruses. These subsequent modifications are considered new variants within the same family as the original malware.

Differences between malware of the same family can often mean that the same virus signature cannot be used to detect multiple versions of malware belonging to the same family. Similarly, CRC extractions may not be effective for extracting multiple versions of malware belonging to the same family.

US5452442 discusses a method to extract and/or evaluate a signature of a computer virus or other undesirable software entity, involving construction of a list of unique n-grams from a sequence of bytes, each of the unique n-grams being comprised of from one to a specified maximum number of sequential bytes of the sequence of bytes.

EP0918285 discusses a system and method for automatically generating polymorphic and non-polymorphic macro viruses.

Nachenberg C S: "A New Technique For Detecting Polymorphic Computer Viruses. A Thesis Submitted In Partial Satisfaction Of The Requirements For The Degree Master Of Science In Computer Science And Engineering". Thesis University Of California, 1995 discusses a method for detecting known polymorphic computer viruses and addressing the problem of false identification of uninfected programs.

C Brenton et al: "Mastering Network Security", SYBEX 2002, ISBN: 0782141420 provides a general discussion of virus scanners and polymorphic viruses.

Jeffrey O. Kephart et al: "Automatic Extraction of Computer Virus Signatures", In Proceedings of the 4th Virus Bulletin (International Conference, R. Ford, ed., Virus Bulletin Ltd., Abingdon, England, 1994 discusses a statistical method for automatically extracting good signatures from the machine code of a virus. The basic idea is to characterize statistically a large corpus of programs, and then to use this information to estimate false-positive probabilities for proposed virus signatures.

### SUMMARY

According to one aspect, the present invention provides a computer-implemented method for creating a virus signature or extraction for use in detecting malware as set out in claim 1.

According to another aspect, the present invention provides a computer-implemented method for detecting malware as set out in claim 7.

According to yet another aspect, the present invention provides system for creating a virus signature or extraction for use in detecting malware as set out in claim 11.

According to still another aspect, the present invention provides a system for detecting malware as set out in claim 17.

According to another aspect, the present invention provides a computer recording medium including computer executable code for causing a processor to perform the above methods.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:
FIG. 1 illustrates a method for scanning for malware according to an embodiment of the present disclosure;
FIG. 2 illustrates a virus signature scan according to an embodiment of the present disclosure;
FIG. 3 illustrates a method for creating an extraction according to an embodiment of the present disclosure;
FIG. 4 illustrates an example of a computer system capable of implementing the methods and systems of the present disclosure.

### DETAILED DESCRIPTION

In describing the preferred embodiments of the present disclosure illustrated in the drawings, specific terminology is employed for sake of clarity. However, the present disclosure is not intended to be limited to the specific terminology so selected, and it is to be understood that each specific element includes all technical equivalents which operate in a similar manner.

Embodiments of the present disclosure allow for the detection of multiple versions of malware belonging to the same family using a single virus signature. After detection of malware by CRC scan, extraction of multiple versions of malware belonging to the same family using a single CRC extraction may be performed.

Embodiments of the present disclosure seek to identify viruses that are members of families of viruses rather than only being able to identify individual viruses. This allows for the detection of a virus that may never have been observed before based on that virus sharing characteristics known to be found in a known family of viruses.

Members of a family of viruses may share many of the same characteristics but may have unique variations. These unique variations are deemed to be points of departure. For example, members of a family of computer viruses may all be identical except they each may access a different port number at a particular place in the file. This port number is the point of departure for this family of computer viruses.

Various members of a family of malware may differ from one another at more than one point of departure. For example, a family of computer viruses may all be identical except they each have a different file size and/or a different entry point location. In this example, this family of viruses will have two points of departure, file size and entry location.

In addition to identifying points of departure, a range of possible values that members of the family of viruses exhibit for a given point of departure may be ascertained. As noted above, a family of computer viruses may all be identical except they each may access a different port number at a particular place in the file. For example, one family member may access port 1000, another family member may access port 1173 and a third family member may access port number 1413. The range of possible values at this point of departure is therefore between 1000 and 1413. It is also possible that all values are fixed with only one possible value. In these cases, the point of departure ascertained is not an actual point of departure because all members of the family share this trait. Nonetheless, such features may be used as fixed value points of departure because these features happen to be well suited for identifying the family of malware itself. As described herein, there is only a single fixed value, that fixed value is considered and referred to as a range, albeit a range where the minimum value is the same as the maximum value. Where there are multiple points of departure, one range or fixed value can be calculated for each point of departure.

The points of departure and the range and/or fixed values for points of departure may be used to form a virus signature that can detect members of a family of viruses. Additional information pertaining to the family of viruses may also be used to form the virus signature. This additional information may include, for example, other characteristics that are shared by the members of the family of viruses, for example, elements of code that may be shared. Detection may then occur when a file is found that exhibits the same points of departure as a virus signature and the values for those points of departure fall within the range corresponding to that point of departure.

Once detected, a virus may sometimes be extracted thereby restoring the infected file to its non-infected state. Not every virus may be extracted. Where a virus cannot be extracted, the infected file may have to be deleted or quarantined to a location where it cannot further infect files.

An extraction may be used to extract a virus from an infected file. An extraction is an algorithm for removing the malware from the file it has infected. In order to create an extraction, the characteristics of the malware may be determined. The extraction may be created to remove all of the malicious code that is held in common by all malware of the same family as well as all of the points of departure that contain values within the calculated range or the exact fixed value.

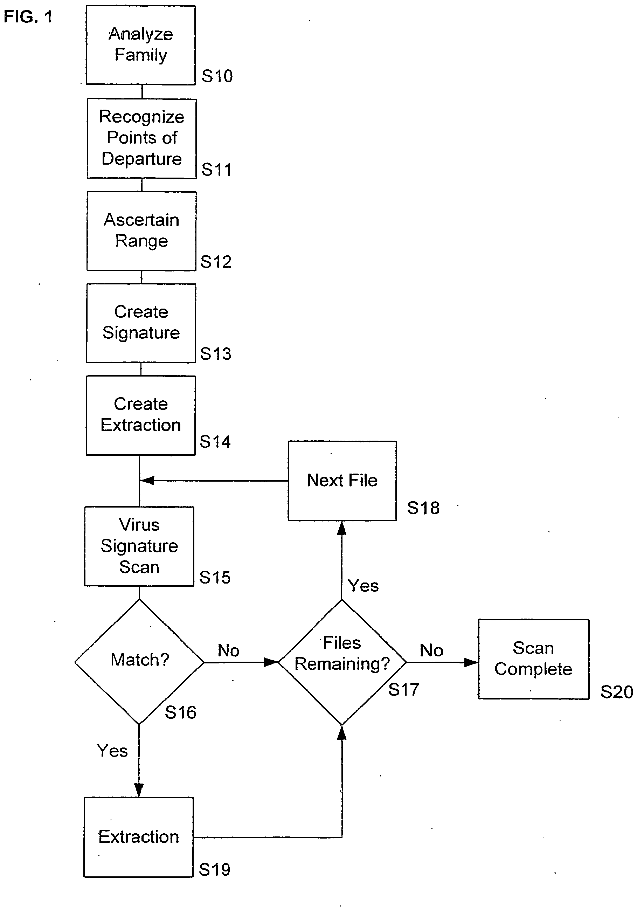

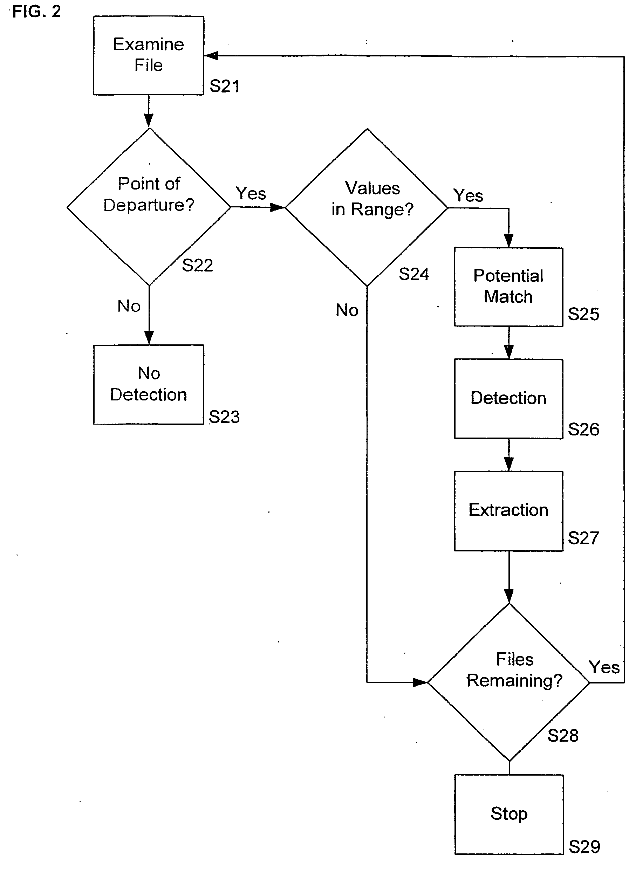

FIG. 1 illustrates the method for utilizing a virus signature scan according to an embodiment of the present disclosure. To accomplish a virus signature scan, multiple forms of malware belonging to the same family are analyzed (Step S10). Points of departure are recognized (Step S11). After all points of departure have been recognized (Step S11), the range of possible values for those points of departure can be ascertained (Step S12). A virus signature may be created for the family of malware (Step S13). Where possible, an extraction is created for the family of malware (Step S 14). A virus signature scan may be performed (Step S15) for the first executable file. This virus signature scan is illustrated in more detail in FIG. 2 and will be described in more detail below. When the virus signature scan turns up no match (No Step S16) and there are other files left to be scanned (Yes Step S17), the next executable file is selected (Step S18) and scanned (Step S15) using the same virus signature scan until all executable files have been scanned (No Step S17) and the scan is complete (Step S20). If a match has been detected (Yes Step S16) then the malware can be handled appropriately (Step S19). For example, if an extraction has been created, the extraction may be initiated to remove the malware infection from the executable file. If no extraction has been created, the infected file may be quarantined or deleted.

After the malware is handled appropriately (Step S19) and there are other files left to be scanned (Yes Step S17), the next executable file is selected (Step S18) and scanned (Step S 15) in the same way until all executable files have been scanned (No Step S17) and the scan is complete (Step S20).

According to an embodiment of the present disclosure, Steps S10 - S14 may be performed by one or more developers who search for methods for detecting and extracting malware. Steps S15 - S18 may be performed by one or more users who wish to protect their files and computer systems from malware. The developers may develop a computer program for performing Steps S15 - S18 and distribute this program to users. The developers may then continue to perform Steps S10 - S14 recognizing new families of malware and creating new virus signatures and extractions. These new virus signatures and extractions may then be distributed to the users who can use them to update the distributed computer program.

FIG. 2 illustrates a virus signature scan according to an embodiment of the present disclosure. First, the executable may be examined (Step S21). This file may be checked against the first virus signature for a particular family of malware. The first point of departure is ascertained from the first virus signature and the executable file is checked to see if it shares that same point of departure (Step S22). For example, the executable file is checked to see if it accesses a port at a particular place in the file. If the executable file does not share the point of departure (No Step S22), then no virus detection has occurred for that virus definition file (Step S23). If this point of departure is identified (Yes Step S22), the corresponding value of the executable is ascertained and the value of the executable is compared against the range of values from the virus signature (Step S24). For example, if the executable file does access a port at a particular place in the file, the port number of the port accessed is ascertained and compared against the range of port numbers from the virus signature file. If the corresponding value is not within the range provided (No Step S24) then no virus detection has occurred for that virus definition file. If the corresponding value is within the range provided in the virus signature file (Yes Step S24), then there is a potential match (Step S25), the virus has been detected (Step S26), and appropriate actions can be taken (Step S27). For example, if an extraction has been created, the extraction may be initiated to remove the malware infection from the executable file. If no extraction has been created, the infected file may be quarantined or deleted.

When the corresponding value is not within the range provided in the virus signature file (No Step S24) or after the virus has been detected (Step S26) and appropriate actions has been taken (Step S27), it is determined whether there are other files remaining to be checked (Step S28). If there are no other files remaining to be checked (No Step S28) then the process may end (Step S29). If there are additional files remaining to be checked (Yes Step S28), then the next file may be examined (Step S21).

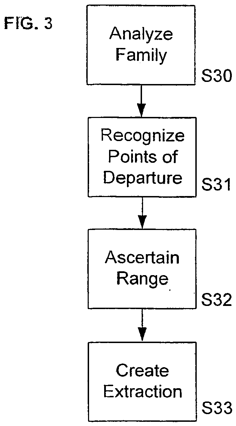

The present disclosure is not limited to detecting malware using a virus signature scan. For example, CRC extraction can be adapted according to the present disclosure. According to one embodiment of the present disclosure, malware is detected using CRC detection. After malware has been detected, malware can be extracted using an extractor that has been created according to the present disclosure. FIG. 3 shows how an extractor can be created according to the present disclosure without the need to create a virus signature as in FIG. 1.

Multiple forms of malware belonging to the same family are analyzed (Step S30). All points of departure are then recognized (Step S31). The range of possible values or fixed value for those points of departure is ascertained (Step S32). An extraction is created for the family of malware (Step S33). In order to create an extraction, the characteristics of the malware are determined. The extraction is created to remove all of the malicious code that is held in common by all malwares of the same family as well as all of the points of departure that contain values within the calculated range or the exact fixed value. This extraction can be used regardless of the method used to scan for malware and is similar to the method for forming an extraction that is discussed above.

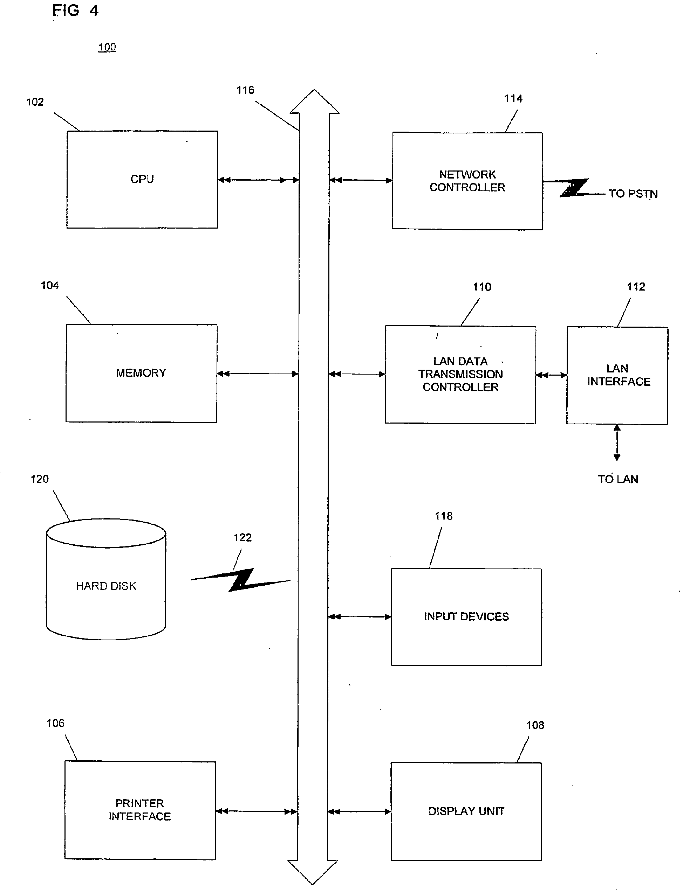

FIG. 4 shows an example of a computer system which may implement the method and system of the present disclosure. The system and method of the present disclosure may be implemented in the form of a software application running on a computer system, for example, a mainframe, personal computer (PC), handheld computer, server, etc. The software application may be stored on a recording media locally accessible by the computer system and accessible via a hard wired or wireless connection to a network, for example, a local area network, or the Internet.

The computer system referred to generally as system 100 may include, for example, a central processing unit (CPU) 102, random access memory (RAM) 104, a printer interface 106, a display unit 108, a local area network (LAN) data transmission controller 110, a LAN interface 112, a network controller 114, an internal buss 116, and one or more input devices 118, for example, a keyboard, mouse etc. As shown, the system 100 may be connected to a data storage device, for example, a hard disk. 120 via a link 122.

The above specific embodiments are illustrative, and many variations can be introduced on these embodiments without departing from the scope of the appended claims. For example, elements and/or features of different illustrative embodiments maybe combined with each other and/or substituted for each other.

## Claims

1. A computer-implemented method for creating a virus signature or extraction for use in detecting malware, comprising:
analyzing (S10;S30) multiple forms of malware belonging to a same family;
recognizing (S11;S31) one or more points of departure in at least one of the multiple forms of malware from at least another one of the multiple forms of malware; and
ascertaining (S12;S32) a range of possible values for each of said one or more points of departure.

2. The method of claim 1, wherein said one or more points of departure and said range of possible values for each of said one or more points of departure are used to create (S13) a virus signature.

3. The method of claim 2, wherein additional information about said multiple forms of malware belonging to said same family is used to create said virus signature, said additional information comprising characteristics that are shared between two or more of the multiple forms of malware belonging to the same family.

4. The method of claim 1, wherein said one or more points of departure and said range of possible values for each of said one or more points of departure are used to create (S 14;S33) an extraction.

5. The method of claim 4, wherein additional information about said multiple forms of malware belonging to said same family is used to create the extraction, said additional information comprising characteristics that are shared between two or more of the multiple forms of malware belonging to the same family.

6. The method of claim 2, further comprising:
creating (S14) an extraction using said one or more points of departure and said range of possible values for each of said one or more points of departure;
performing (S15) a virus signature scan on executable files using said virus signature to detect malware; and
extracting (S19) detected malware from said executable files using said extraction.

7. A computer-implemented method for detecting malware comprising:
scanning (S21) a file;
detecting (S22) a characteristic of the file that matches a characteristic listed within a signature created by the method of claim 2; and
determining (S24-S26) if the detected characteristic of the file has a value that falls within a range of values for the characteristic listed within the signature.

8. The method of claim 7, wherein the characteristic listed within the malware signature represents a point of departure between two or more members of a family of malware.

9. The method of claim 7, wherein the file is an executable file.

10. The method of claim 7, further comprising extracting (S27) malware from the file when it has been determined that the detected characteristic of the file has a value that falls within the range of values for the characteristic listed within the signature.

11. A system (100) for creating a virus signature or extraction for use in detecting malware, comprising:
means (102) for analyzing multiple forms of malware belonging to a same family;
means (102) for recognizing one or more points of departure in at least one of the multiple forms of malware from at least another one of the multiple forms of malware; and
means (102) for ascertaining a range of possible values for each of said one or more points of departure.

12. The system of claim 11, wherein said one or more points of departure and said range of possible values for each of said one or more points of departure are used to create a virus signature.

13. The system of claim 12, wherein additional information about said multiple forms of malware belonging to said same family is used to create said virus signature, said additional information comprising characteristics that are shared between two or more of the multiple forms of malware belonging to the same family.

14. The system of claim 11, wherein said one or more points of departure and said range of possible values for each of said one or more points of departure are used to create an extraction.

15. The system of claim 14, wherein additional information about said multiple forms of malware belonging to said same family is used to create the extraction, said additional information comprising characteristics that are shared between two or more of the multiple forms of malware belonging to the same family.

16. The system of claim 12, further comprising:
means (102) for creating an extraction using said one or more points of departure and said range of possible values for each of said one or more points of departure;
means (102) for performing a virus signature scan on executable files using said virus signature to detect malware; and
means (102) for extracting detected malware from said executable files using said extraction.

17. A system (100) for detecting malware comprising:
means (102) for scanning a file;
means (102) for detecting a characteristic of the file that matches a characteristic listed within a signature created by the system of claim 12; and
means (102) for determining that the detected characteristic of the file has a value that falls within a range of values for the characteristic listed within the signature.

18. The system of claim 17, wherein the characteristic listed within the malware signature represents a point of departure between two or more members of a family of malware.

19. The system of claim 17, wherein the file is an executable file.

20. The system of claim 17, further comprising means for extracting malware from the file when it has been determined that the detected characteristic of the file has a value that falls within the range of values for the characteristic listed within the signature.

21. A computer recording medium including computer executable code which, when executed by a processor, causes the processor to perform the method of any one of claims 1 to 10.

## Patentansprüche

1. Computerimplementiertes Verfahren zum Erzeugen einer Virussignatur oder Extraktion zur Verwendung beim Erfassen von Malware, wobei das Verfahren Folgendes umfasst:
Analysieren (S10; S30) mehrerer Formen von Malware, die zu derselben Familie gehören;
Erkennen (S11; S31) eines oder mehrerer Ausgangspunkte in mindestens einer der mehreren Formen von Malware von mindestens einer anderen der mehreren Formen von Malware und
Festlegen (S12; S32) eines Bereichs möglicher Werte für jeden des einen oder der mehreren Ausgangspunkte.

2. Verfahren nach Anspruch 1, wobei der eine oder die mehreren Ausgangspunkte und der Bereich möglicher Werte für jeden des einen oder der mehreren Ausgangspunkte zum Erzeugen (S13) einer Virussignatur verwendet werden.

3. Verfahren nach Anspruch 2, wobei Zusatzinformationen zu den mehreren Formen von Malware, die zu derselben Familie gehören, zum Erzeugen der Virussignatur verwendet werden, wobei die Zusatzinformationen Charakteristika umfassen, die zwischen zwei oder mehr der mehreren Formen von Malware, die zu derselben Familie gehören, geteilt werden.

4. Verfahren nach Anspruch 1, wobei der eine oder die mehreren Ausgangspunkte und der Bereich möglicher Werte für jeden des einen oder der mehreren Ausgangspunkte zum Erzeugen (S14; S33) einer Extraktion verwendet werden.

5. Verfahren nach Anspruch 4, wobei Zusatzinformationen zu den mehreren Formen von Malware, die zu derselben Familie gehören, zum Erzeugen der Extraktion verwendet werden, wobei die Zusatzinformationen Charakteristika umfassen, die zwischen zwei oder mehr der mehreren Formen von Malware, die zu derselben Familie gehören, geteilt werden.

6. Verfahren nach Anspruch 2, das weiterhin Folgendes umfasst:
Erzeugen (S14) einer Extraktion unter Verwendung des einen oder der mehreren Ausgangspunkte und des Bereichs möglicher Werte für jeden des einen oder der mehreren Ausgangspunkte;
Durchführen (S15) eines Virussignaturscans an ausführbaren Dateien unter Verwendung der Virussignatur, um Malware zu erfassen; und
Extrahieren (S19) erfasster Malware aus den ausführbaren Dateien unter Verwendung der Extraktion.

7. Computerimplementiertes Verfahren zum Erfassen von Malware, wobei das verfahren Folgendes umfasst:
Scannen (S21) einer Datei;
Erfassen (S22) eines Charakteristikums der Datei, das einem Charakteristikum entspricht, das in einer Signatur aufgelistet ist, die von dem Verfahren nach Anspruch 2 erzeugt wurde; und
Bestimmen (S24 - S26), ob das erfasste Charakteristikum der Datei einen Wert aufweist, der in einen Bereich von Werten für das Charakteristikum, das in der Signatur aufgelistet ist, fällt.

8. Verfahren nach Anspruch 7, wobei das Charakteristikum, das in der Malware-Signatur aufgelistet ist, einen Ausgangspunkt zwischen zwei oder mehr Mitgliedern einer Familie von Malware darstellt.

9. Verfahren nach Anspruch 7, wobei die Datei eine ausführbare Datei ist.

10. Verfahren nach Anspruch 7, das weiterhin das Extrahieren (S27) von Malware aus der Datei umfasst, wenn es bestimmt hat, dass das erfasste Charakteristikum der Datei einen Wert aufweist, der in den Bereich von Werten für das Charakteristikum, das in der Signatur aufgelistet ist, fällt.

11. System (100) zum Erzeugen einer Virussignatur oder Extraktion zur Verwendung beim Erfassen von Malware, wobei das System Folgendes umfasst:
Mittel (102) zum Analysieren mehrerer Formen von Malware, die zu derselben Familie gehören;
Mittel (102) zum Erkennen eines oder mehrerer Ausgangspunkte in mindestens einer der mehreren Formen von Malware von mindestens einer anderen der mehreren Formen von Malware und
Mittel (102) zum Festlegen eines Bereichs möglicher Werte für jeden des einen oder der mehreren Ausgangspunkte.

12. System nach Anspruch 11, wobei der eine oder die mehreren Ausgangspunkte und der Bereich möglicher Werte für jeden des einen oder der mehreren Ausgangspunkte zum Erzeugen einer Virussignatur verwendet werden.

13. System nach Anspruch 12, wobei Zusatzinformationen zu den mehreren Formen von Malware, die zu derselben Familie gehören, zum Erzeugen der Virussignatur verwendet werden, wobei die Zusatzinformationen Charakteristika umfassen, die zwischen zwei oder mehr der mehreren Formen von Malware, die zu derselben Familie gehören, geteilt werden.

14. System nach Anspruch 11, wobei der eine oder die mehreren Ausgangspunkte und der Bereich möglicher Werte für jeden des einen oder der mehreren Ausgangspunkte zum Erzeugen einer Extraktion verwendet werden.

15. System nach Anspruch 14, wobei Zusatzinformationen zu den mehreren Formen von Malware, die zu derselben Familie gehören, zum Erzeugen der Extraktion verwendet werden, wobei die Zusatzinformationen Charakteristika umfassen, die zwischen zwei oder mehr der mehreren Formen von Malware, die zu derselben Familie gehören, geteilt werden.

16. System nach Anspruch 12, das weiterhin Folgendes umfasst:
Mittel (102) zum Erzeugen einer Extraktion unter Verwendung des einen oder der mehreren Ausgangspunkte und des Bereichs möglicher Werte für jeden des einen oder der mehreren Ausgangspunkte;
Mittel (102) zum Durchführen eines Virussignaturscans an ausführbaren Dateien unter Verwendung der Virussignatur, um Malware zu erfassen; und
Mittel (102) zum Extrahieren erfasster Malware aus den ausführbaren Dateien unter Verwendung der Extraktion.

17. System (100) zum Erfassen von Malware, das Folgendes umfasst:
Mittel (102) zum Scannen einer Datei;
Mittel (102) zum Erfassen eines Charakteristikums der Datei, das einem Charakteristikum entspricht, das in einer Signatur aufgelistet ist, die von dem System nach Anspruch 12 erzeugt wurde; und
Mittel (102) zum Bestimmen, ob das erfasste Charakteristikum der Datei einen Wert aufweist, der in einen Bereich von Werten für das Charakteristikum, das in der Signatur aufgelistet ist, fällt.

18. System nach Anspruch 17, wobei das Charakteristikum, das in der Malware-Signatur aufgelistet ist, einen Ausgangspunkt zwischen zwei oder mehr Mitgliedern einer Familie von Malware darstellt.

19. System nach Anspruch 17, wobei die Datei eine ausführbare Datei ist.

20. System nach Anspruch 17, das weiterhin Mittel zum Extrahieren von Malware aus der Datei umfasst, wenn es bestimmt hat, dass das erfasste Charakteristikum der Datei einen Wert aufweist, der in den Bereich von Werten für das Charakteristikum, das in der Signatur aufgelistet ist, fällt.

21. Computeraufzeichnungsmedium, das computerausführbaren Code enthält, der bei Ausführung durch einen Prozessor bewirkt, dass der Prozessor das Verfahren nach einem der Ansprüche 1 bis 10 durchführt.

## Revendications

1. Procédé mis en oeuvre dans un ordinateur pour créer une signature de virus ou une extraction destinée à être utilisée dans la détection de logiciels malveillants, comprenant les étapes consistant à :
analyser (S10 ; S30) de multiples formes de logiciels malveillants appartenant à une même famille ;
reconnaître (S11 ; S31) un ou plusieurs points de départ dans au moins l'une des multiples formes de logiciels malveillants à partir d'au moins une autre des multiples formes de logiciels malveillants ; et
déterminer (S12 ; S32) une plage de valeurs possibles pour chacun desdits un ou plusieurs points de départ.

2. Procédé selon la revendication 1, dans lequel lesdits un ou plusieurs points de départ et ladite plage de valeurs possibles pour chacun desdits un ou plusieurs points de départ sont utilisés pour créer (S13) une signature de virus.

3. Procédé selon la revendication 2, dans lequel des informations supplémentaires à propos desdites multiples formes de logiciels malveillants appartenant à ladite même famille sont utilisées pour créer ladite signature de virus, lesdites informations supplémentaires comprenant des caractéristiques qui sont partagées entre deux formes au moins parmi les multiples formes de logiciels malveillants appartenant à la même famille.

4. Procédé selon la revendication 1, dans lequel lesdits un ou plusieurs points de départ et ladite plage de valeurs possibles pour chacun desdits un ou plusieurs points de départ sont utilisés pour créer (S14; S33) une extraction.

5. Procédé selon la revendication 4, dans lequel des informations supplémentaires à propos desdites multiples formes de logiciels malveillants appartenant à ladite même famille sont utilisées pour créer l'extraction, lesdites informations supplémentaires comprenant des caractéristiques qui sont partagées entre deux formes au moins parmi les multiples formes de logiciels malveillants appartenant à la même famille.

6. Procédé selon la revendication 2, comprenant en outre les étapes consistant à :
créer (S14) une extraction en utilisant lesdits un ou plusieurs points de départ et ladite plage de valeurs possibles pour chacun desdits un ou plusieurs points de départ ;
mettre en oeuvre (S15) une analyse de signature de virus sur des fichiers exécutables en utilisant ladite signature de virus, pour détecter des logiciels malveillants ; et
extraire (S19) des logiciels malveillants détectés desdits fichiers exécutables en utilisant ladite extraction.

7. Procédé mis en oeuvre dans un ordinateur, destiné à détecter des logiciels malveillants, comprenant les étapes consistant à :
analyser (S21) un fichier ;
détecter (S22) une caractéristique du fichier qui correspond à une caractéristique répertoriée dans une signature créée par le procédé selon la revendication 2 ; et
déterminer (S24-S26) si la caractéristique détectée du fichier présente une valeur comprise dans une plage de valeurs pour la caractéristique répertoriée dans la signature.

8. Procédé selon la revendication 7, dans lequel la caractéristique répertoriée dans la signature de logiciel malveillant représente un point de départ entre deux membres au moins d'une famille de logiciels malveillants.

9. Procédé selon la revendication 7, dans lequel le fichier est un fichier exécutable.

10. Procédé selon la revendication 7, comprenant en outre l'étape consistant à extraire (S27) un logiciel malveillant du fichier lorsqu'il a été déterminé que la caractéristique détectée du fichier présente une valeur comprise dans la plage de valeurs pour la caractéristique répertoriée dans la signature.

11. Système (100) destiné à créer une signature de virus ou une extraction destinée à être utilisée dans la détection de logiciels malveillants, comprenant :
un moyen (102) pour analyser de multiples formes de logiciels malveillants appartenant à une même famille ;
un moyen (102) pour reconnaître un ou plusieurs points de départ dans au moins l'une des multiples formes de logiciels malveillants à partir d'au moins une autre des multiples formes de logiciels malveillants ; et
un moyen (102) pour déterminer une plage de valeurs possibles pour chacun desdits un ou plusieurs points de départ.

12. Système selon la revendication 11, dans lequel lesdits un ou plusieurs points de départ et ladite plage de valeurs possibles pour chacun desdits un ou plusieurs points de départ sont utilisés pour créer une signature de virus.

13. Système selon la revendication 12, dans lequel des informations supplémentaires à propos desdites multiples formes de logiciels malveillants appartenant à ladite même famille sont utilisées pour créer ladite signature de virus, lesdites informations supplémentaires comprenant des caractéristiques qui sont partagées entre deux formes au moins parmi les multiples formes de logiciels malveillants appartenant à la même famille.

14. Système selon la revendication 11, dans lequel lesdits un ou plusieurs points de départ et ladite plage de valeurs possibles pour chacun desdits un ou plusieurs points de départ sont utilisés en vue de créer une extraction.

15. Système selon la revendication 14, dans lequel des informations supplémentaires à propos desdites multiples formes de logiciels malveillants appartenant à ladite même famille sont utilisées pour créer l'extraction, lesdites informations supplémentaires comprenant des caractéristiques qui sont partagées entre deux formes au moins parmi les multiples formes de logiciels malveillants appartenant à la même famille.

16. Système selon la revendication 12, comprenant en outre :
un moyen (102) pour créer une extraction en utilisant lesdits un ou plusieurs points de départ et ladite plage de valeurs possibles pour chacun desdits un ou plusieurs points de départ ;
un moyen (102) pour mettre en oeuvre une analyse de signature de virus sur des fichiers exécutables en utilisant ladite signature de virus pour détecter des logiciels malveillants ; et
un moyen (102) pour extraire des logiciels malveillants détectés desdits fichiers exécutables en utilisant ladite extraction.

17. Système (100) destiné à détecter des logiciels malveillants, comprenant :
un moyen (102) pour analyser un fichier ;
un moyen (102) pour détecter une caractéristique du fichier laquelle correspond à une caractéristique répertoriée dans une signature créée par le système selon la revendication 12 ; et
un moyen (102) pour déterminer que la caractéristique détectée du fichier présente une valeur comprise dans une plage de valeurs pour la caractéristique répertoriée dans la signature.

18. Système selon la revendication 17, dans lequel la caractéristique répertoriée dans la signature de logiciel malveillant représente un point de départ entre deux membres au moins d'une famille de logiciels malveillants.

19. Système selon la revendication 17, dans lequel le fichier est un fichier exécutable.

20. Système selon la revendication 17, comprenant en outre un moyen pour extraire un logiciel malveillant du fichier lorsqu'il a été déterminé que la caractéristique détectée du fichier présente une valeur comprise dans la plage de valeurs pour la caractéristique répertoriée dans la signature.

21. Support d'enregistrement informatique comprenant un code exécutable par ordinateur qui, lorsqu'il est exécuté par un processeur, amène le processeur à mettre en oeuvre le procédé selon l'une quelconque des revendications 1 à 10.
